# EUROPEAN PATENT APPLICATION

(11) **EP 4 636 356 A1**
(43) Date of publication of application: **22.10.2025**
(21) Application number: 25159584.9
(22) Date of filing: 24.02.2025
(51) Int. Cl.: G01C 21/00, G06F 16/29, G06V 10/48

(54) **SYSTEMS AND METHODS FOR CREATING GEO-REFERENCED MAPS**

(30) Priority: 26.02.2024 US 202418586759
(71) Applicant: The Boeing Company, Arlington, VA 22202 (US)
(72) Inventor: ABUGHAZALEH, Yazan Firas, ARLINGTON, 22202 (US); KNUTSON, Claire Carol, ARLINGTON, 22202 (US); JEFFCOAT, Mark E., ARLINGTON, 22202 (US)
(74) Representative: Plasseraud IP

(57) **Abstract**

A system and a method include identifying characteristics of a map of a geographic location, and placing plural first lines of longitude and plural first lines of latitude of the map based in part on the characteristics. The first lines of longitude and latitude intersect with each other to create plural theoretical intersections. A magnification of a segment of the map, that includes the first theoretical intersection, is changed. One or more edges associated with one or more second lines of longitude or latitude are identified, and a location of a first actual intersection within the first segment is determined based in part on the identification of the one or more edges associated with the second lines of longitude and latitude.

## Description

### FIELD OF THE DISCLOSURE

Examples of the present disclosure generally relate to systems and methods for creating geo-referenced maps.

### BACKGROUND OF THE DISCLOSURE

In the aviation industry, it is important to periodically update maps of geographic areas, such as airports and airport runways. This is to ensure that pilots and air traffic controllers have up to date charts that show all the structural features (buildings, antennas, roads, etc.) that are located at or near an airport. In some instances, the updated maps are generated and provided by an authoritative organization as visual flight rule (VFR) aeronautical charts.

When a map or VFR chart is created or updated, ground control points (GCPs) must to be located on the VFR chart in order to geo-reference the VFR chart to a map. For example, a geo-referenced map provides a system for locating objects on the surface of the earth according to "real world" coordinates, such as latitude and longitude. For example, a geo-referenced map can use the latitude and longitude of an object, such as an airplane, to display the airplane on the geo-referenced map in the same position as the airplane's actual, physical position on the surface of the earth.

However, identifying locations of GCPs on a new or updated VFR chart requires an operator to manually review the new or updated VFR chart in order to locate true positions of the GCPs. The manual process is labor-intensive, requiring the operator to manually select each ground control point; is subjective, resulting in inconsistencies between different operators examining different charts; and error prone, increasing the risk of an operator missing GCPs or inaccurately placing a GCP.

### SUMMARY OF THE DISCLOSURE

A need exists for a system and a method for creating a geo-referenced map that includes placement of actual locations of intersections between lines of longitude and latitude. The actual locations of the intersections may be identified by pixels having corresponding latitude and longitude values identified on the geo-referenced map.

With those needs in mind, certain examples of the present disclosure provide a method that includes identifying characteristics of a map or chart of a geographic location, and adding, placing, and/or creating plural first lines of longitude and plural lines of latitude on to the map based in part on the one or more characteristics. The plural first lines of longitude and latitude intersect with each other to create plural theoretical intersections between the first lines of longitude and latitude. The method includes changing a magnification of a segment of the map, the segment including a first theoretical intersection between at least one of the first lines of longitude and one of the first lines of latitude. One or more edges associated with second lines of longitude and/or latitude are identified within the first segment, and a location of a first actual intersection within the first segment is determined based in part on the identification of the one or more edges associated with second lines of longitude and latitude.

In at least one example, the location of the first actual intersection is different than a location of the first theoretical intersection. In another example, the location of the first actual intersection may be the same, substantially the same, or within a determined threshold as the location of the first theoretical intersection.

In at least one example, the method can include identifying a first point of longitude and a first point of latitude associated with the location of the first actual intersection. For example, the location of the first actual intersection may identify a pixel of the map, and the pixel may include a corresponding longitude-latitude point. In at least one example, the map may be modified to include the first point of longitude and the first point of latitude associated with the location of the first actual intersection to create an updated map of the geographic location. In one example, the updated map may be referred to as a geo-referenced map that may be used to display objects on the geo-referenced map in the same position as the actual, physical position of the object on the surface of the earth. Optionally, the updated map of the geographic location may be communicated (e.g., via one or more wired or wireless communication connections), may be shared with an operator, may be stored within a database, or the like.

In at least one example, the method may include changing a magnification of a second segment of the map that includes a second theoretical intersection between at least one of the lines of longitude and one of the lines of latitude. One or more edges associated with the second lines of longitude and/or latitude are identified within the second segment, and a location of a second actual intersection within the second segment is determined based in part on the identification of the one or more edges associated with the second lines of longitude and/or latitude.

In at least one example, the method can include identifying a second point of longitude and a second point of latitude associated with the location of the second actual intersection. For example, the location of the second actual intersection may identify a second pixel of the map, and the second pixel may include a corresponding longitude-latitude point. In at least one example, the map may be modified to include the second point of longitude and the second point of latitude associated with the location of the second actual intersection to create an updated map of the geographic location. Optionally, the method can include identifying plural intersection locations, each of the plural intersection locations associated with a point of longitude and a point of latitude.

In at least one example, the method can include determining a relationship between the location of the first actual intersection within the first segment of the map and the location of the second actual intersection within the second segment of the map. Optionally, the one or more second (e.g., actual) lines of longitude and/or latitude may be identified based on the relationship between the location of the first actual intersection and the location of the second actual intersection.

Certain examples of the present disclosure provide a method that includes identifying characteristics of a map or chart of a geographic location, and creating plural lines of longitude and plural lines of latitude on the map based in part on the characteristics. The plural lines of longitude and the plural lines of latitude intersect with each other to form plural theoretical intersections. The method includes separating the map into plural segments, each of the plural segments including at least one of the plural theoretical intersections. A magnification of each segment is changed, and one or more edges associated with second lines of longitude and latitude are identified within each of the plural segments. The method includes determining plural locations of actual intersections based in part on the one or more edges. The locations of the actual intersections correspond to locations of the plural theoretical intersections within each of the plural segments.

Certain examples of the present disclosure provide a non-transitory computer-readable storage med²ium comprising executable instructions that, in response to execution, cause one or more control systems comprising one or more processors to perform operations that include identifying one or more characteristics of a map of a geographic location and placing plural theoretical lines of longitude and plural theoretical lines of latitude on the map based in part on the characteristics that are identified. The plural theoretical lines of longitude and latitude form plural theoretical intersections. The operations also include separating the map into plural segments, each of which including at least one of the plural theoretical intersections. A magnification of each of the plural segments is changed and one or more edges associated with one or more actual lines of longitude and/or latitude within each of the plural segments are identified. Plural locations of actual intersections are determined based on the edges associated with the actual lines of longitude and latitude within each of the plural segments. The locations of the actual intersections correspond to locations of the plural theoretical intersections within each of the plural segments.

### BRIEF DESCRIPTION OF THE DRAWINGS

Figure 1 illustrates a schematic block diagram of a control system, according to an example of the present disclosure.
Figure 2 illustrates a flowchart of a method, according to an example of the present disclosure.
Figure 3 illustrates a map of a geographic location, according to an example of the present disclosure.
Figure 4 illustrates the map shown in Figure 3 including theoretical intersections of lines of longitude and latitude, according to an example of the present disclosure.
Figure 5 illustrates a magnified segment of the map shown in Figure 4, according to an example of the present disclosure.
Figure 6 illustrates an updated map of the geographic location, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

New or updated visual flight rule (VFR) charts or maps need to be updated to be geo-referenced. For example, ground control points (GCPs) need to be located within the new or updated VFR charts in order to geo-reference the VFR charts. The systems and methods automatically determine locations of actual lines of longitude and latitude, and locations of actual intersections between the lines of longitude and latitude, on a map or chart, such as the new or updated VFR chart. Locating the actual lines of longitude and latitude, and the actual locations of intersections between the lines of longitude and latitude provides real world coordinates that can be used to display objects within the map or the VFR charts in the same position as the actual, physical position of the objects on the surface of the earth.

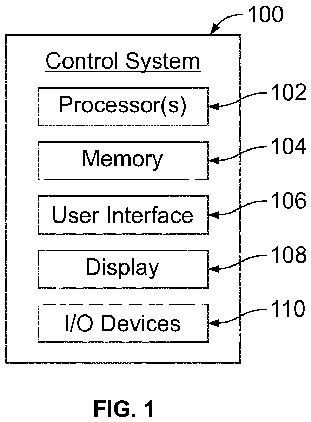

Figure 1 illustrates a schematic block diagram of a control system 100, according to an example of the present disclosure. In at least one example, the control system 100 includes having one or more processors 102 in communication with a memory 104. In one or more examples, the memory 104 stores instructions, data that is received by the control system 100, data that is generated by the control system 100, or the like. The control system 100 shown in Figure 1 is merely exemplary, and non-limiting.

As used herein, the term "control system," "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control system 100 may be or include the one or more processors 102 that are configured to control operation, as described herein.

The control system 100 is configured to execute a set of instructions that are stored in one or more of the memory 104 or one or more other data storage units or elements in order to process data. The memory 104 may also store data or other information as desired or needed. The memory may be in the form of an information source or a physical memory element within a processing machine.

The set of instructions may include various commands that instruct the control system 100 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control system 100. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control system 100 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

The control system 100 can include a user interface 106 that includes a display 108 and an input/output device 110 (I/O device shown in Figure 1). For example, the display 108 may be an electronic monitor, television, touch screen, and/or the like, and the input/output device 110 can be and/or include a keyboard, a mouse, a stylus, a speaker, a light, or the like. In at least one example the display 108 and the I/O device 110 are integrated as a touchscreen interface. In at least one example, the user interface 106 is a computer workstation. As another example, the user interface 106 can be a handheld device, such as a smartphone, a smart tablet, or the like. In at least one example, the one or more processors 102 and the user interface 106 are at a common location, such as a central monitoring location, onboard a vehicle, such as an aircraft system, or the like. As another example, the processors 102 and the user interface 106 can be remote from each other.

In one example, the control system 100 may be communicatively coupled with another controller or control system (not shown) through one or more antennas, transceivers, radios, communication networks (such as private and/or public internet communications), and/or the like.

Referring to Figures 1-6, examples of the subject disclosure provide systems and methods that allow large amounts of data to be quickly and efficiently analyzed by a computing device. For example, the control system 100 can receive and/or analyze various aspects of maps, charts, aerial images, geographic regions, and the like. The control system 100 can receive and analyze hundreds, thousands, or more maps 300 over days, weeks, months, or years. As such, large amounts of data, which may not be discernable by human beings, are being tracked and analyzed. The vast amounts of data are efficiently organized and/or analyzed by the control system 100, as described herein. The control system 100 analyzes the data in a relatively short time in order to quickly and efficiently determine locations of actual intersections between lines of longitude and lines of latitude of a map or chart in order to create a geo-referenced map. A human being would be incapable of efficiently analyzing such vast amounts of data in such a short time. As such, examples of the present disclosure provide increased and efficient functionality, and vastly superior performance in relation to a human being reviewing and/or analyzing the vast amounts of data.

**In** at least one example, all or part of the systems and methods described herein may be or otherwise include an artificial intelligence (AI) or machine-learning system that can automatically perform the operations of the methods also described herein. For example, the control system 100 can be an artificial intelligence or machine learning system. These types of systems may be trained from outside information and/or self-trained to repeatedly improve the accuracy with how data is analyzed. Over time, these systems can improve by determining such information with increasing accuracy and speed, thereby significantly reducing the likelihood of any potential errors. For example, the AI or machine-learning systems can learn and identify characteristics of a map or a chart, magnify and examine plural different segments or regions of the map, and automatically determine locations (e.g., a specific point in space) of actual intersections of lines of longitude and latitude in order to geo-reference visual flight rule (VFR) charts to the map. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), and/or the like. The systems may be trained and re-trained using feedback from one or more prior analyses of the data, ensemble data, and/or other such data. Based on this feedback, the systems may be trained by adjusting one or more parameters, weights, rules, criteria, or the like, used in the analysis of the same. This process can be performed using the data and ensemble data instead of training data, and may be repeated many times to repeatedly improve the determination of locations of actual intersections. The training minimizes conflicts and interference by performing an iterative training algorithm, in which the systems are retrained with an updated set of data (for example, data received before, during, and/or after each time a VFR chart is updated, released, or the like) and based on the feedback examined prior to the most recent training of the systems. This provides a robust analysis model that can better determine situational information in a cost effective and efficient manner.

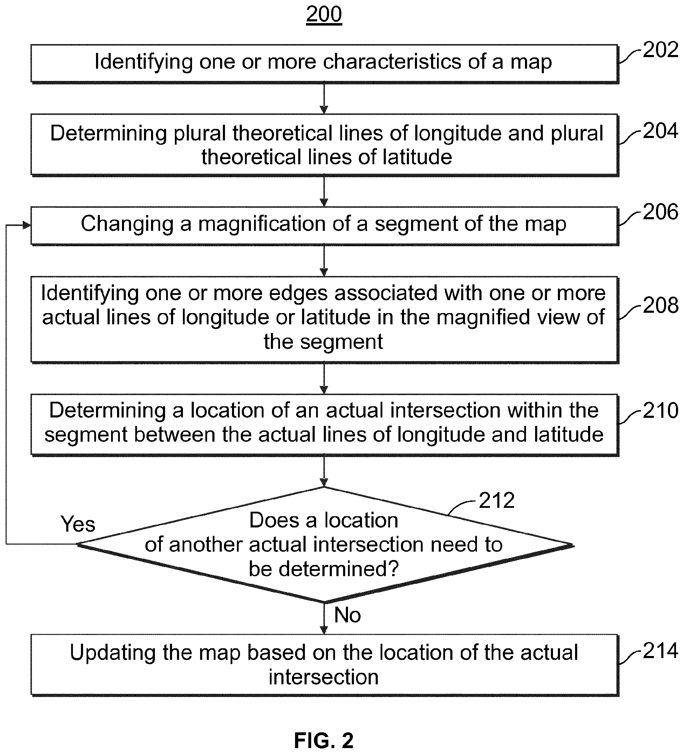

Figure 2 illustrates a flow chart 200 of a method for creating a geo-referenced map, according to an example of the present disclosure. As one example, the flow chart provides a method for finding ground control points (GCP) in order to geo-reference a visual flight rules (VFR) chart to a map. **In** one example, the control system 100 may receive and/or acquire a map or chart, such as from another controller, control system, communication system, or the like (not shown). For example, the control system 100 may receive a map or chart from another controller via a wireless communication and/or wired communication link with the other controller. As another example, the map or chart may be a physical map or chart, and the physical map or chart may be digitally scanned by a scanning device (not shown) of the control system 100. **In** one example, the map or chart may be received by the control system 100 and stored within the memory 104 of the control system 100.

The control system 100 may receive a map or chart at a determined interval in time (e.g., about every week, about every month, about every 6 months, about every year, etc.) and/or at irregular intervals in time. For example, the control system 100 may receive a map or chart responsive to a new VFR chart being created or generated, responsive to an existing VFR chart being modified, or the like.

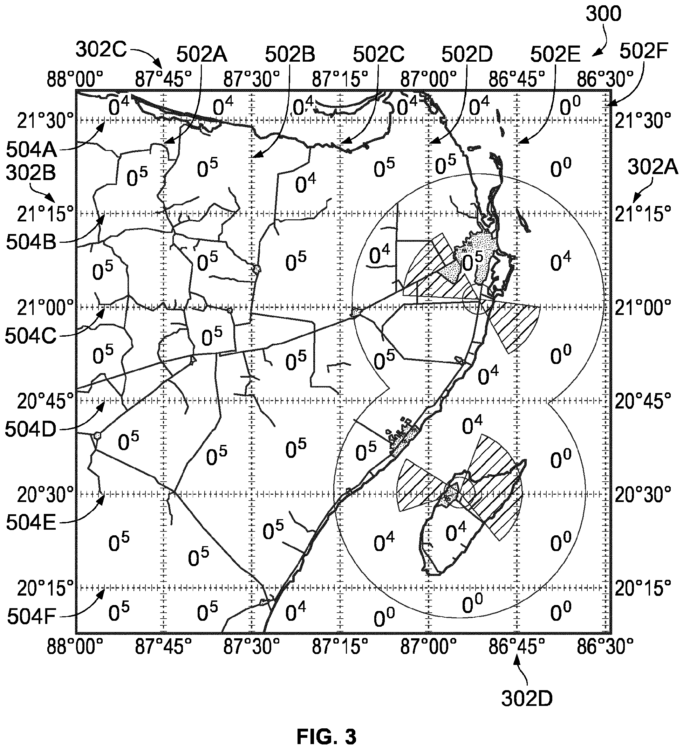

At 202, one or more characteristics of a map are identified. Figure 3 illustrates an example of a map 300, according to one example of the present disclosure. The map 300 is a chart of a geographic location or area. As one example, the map 300 may be displayed to an operator of the control system 100 via the display 108. In the illustrated example, the map 300 includes plural actual lines of longitude 502A-F and plural actual lines of latitude 504A-F. The map 300 also includes several characters (e.g., text and/or symbols) and other distinguishing elements throughout the image of the map, making it difficult for the processors 102 of the control system 100 to distinguish the lines of longitude and latitude from other features, characters, or the like scattered across the map 300. In order to locate actual intersections between the lines of longitude and latitude, the one or more processors 102 of the control system 100 may need to ignore, eliminate, white out, or the like, the actual lines of longitude and latitude and the other data, symbols, characters, etc., that are located on the map, and focus on characters located outside of the map 300, such as around a perimeter of the map 300.

The one or more processors 102 of the control system 100 may automatically identify (e.g., without operator input) one or more characteristics 302A-D of the map 300. In one example, the processors 102 may scan or review the image 300 and may identify the one or more characteristics 302A-D by using a character recognition software model. In another example, the operator may manually identify one or more of the characteristics 302A-D of the map.

In one or more examples, the optical character recognition software may identify text (e.g., letters, numbers, symbols, etc.) or other identifying marks on and/or around the map 300 that may be associated with latitude and/or longitude. For example, the one or more characteristics 302A-D may be one or more text and/or symbols that may identify one or more points of longitude and/or points of latitude identified around a perimeter of the map. Optionally, the one or more characteristics may be other characters and/or symbols associated with points of intersections of lines of longitude and latitude on the map, geographic landmarks, or the like. The illustrated example shown in Figure 3 includes four characteristics 302A-D that are identified, but in alternative embodiments, less than four or more than four characteristics may be identified. The four characteristics 302A-D are disposed around a perimeter of the map 300, but in alternative examples may be located at one or more locations within the map 300, or the like. The different characteristics may be the same, substantially the same, or common characteristics or features of the map (e.g., similar text and/or symbols, all points of latitude and/or longitude, all lines of latitude and/or longitude), or one or more of the characteristics may be different than one or more other characteristics.

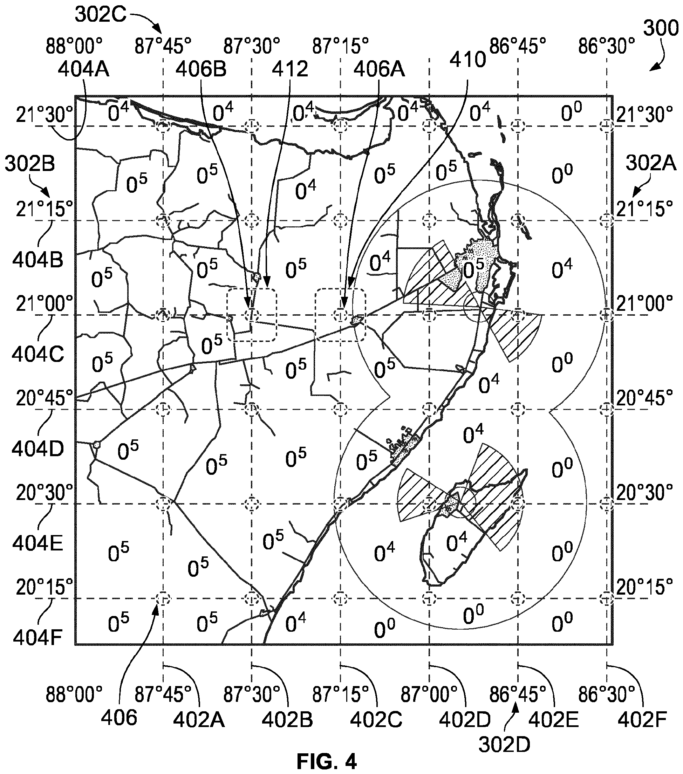

Returning to Figure 2, at 204, plural theoretical first lines of longitude and plural theoretical first lines of latitude may be determined based at least in part on the one or more characteristics that are identified. For example, Figure 4 illustrates the map 300 that includes plural first lines of longitude 402A-F and plural first lines of latitude 404A-F, according to one example of the present disclosure. The plural lines of longitude and latitude may be projected onto the map 300 based on the locations of the one or more characteristics 302A-D around the perimeter of the map 300 that are identified. For example, the one or more processors 102 of the control system 100 may automatically determine theoretical locations and/or positions of each of the plural lines of longitude and latitude, respectively, via an image segmentation model, an optical recognition program, or the like, based on the locations and/or types of the one or more characteristics 302A-D that are identified. The one or more processors 102 may display and/or include the projected plural first lines of longitude 402A-F and the plural first lines of latitude 404A-F onto the map 300, such as for display to an operator.

The plural first lines of longitude 402A-F and the plural first lines of latitude 404A-F may also be referred to as theoretical first lines of longitude and theoretical first lines of latitude, respectively. For example, the processors 102 may rely on the one or more characters 302A-D to determine theoretical placement of the plural lines of longitude and latitude. For example, the locations and/or placement of the theoretical lines of longitude and latitude may be theorized, assumed, expected, anticipated, general, generic, or the like, and may not be real, factual, actual, or definite locations of actual lines of longitude and latitude. For example, the theoretical lines may be assumptive and may be indicative of general locations where the actual lines of longitude 502A-F and the actual lines of latitude 504A-F may actually or exactly be positioned on the map 300.

The plural first lines of longitude 402A-F and the plural first lines of latitude 404A-F may intersect with each other to create plural theoretical intersections 406 between the lines of longitude and latitude. In one example, one or more segments 410, 412 of the map 300 may be identified and/or selected (e.g., manually and/or automatically without human intervention). The one or more segments 410, 412 may be identified based on locations of the theoretical intersections 406 between the plural first lines of longitude 402A-F and the plural first lines of latitude 404A-F. In the illustrated example shown in Figure 4, a first segment 410 includes a first theoretical intersection 406A and a second segment 412 includes a second theoretical intersection 406B.

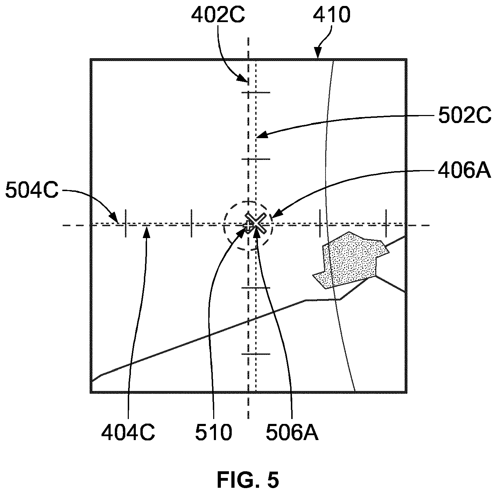

Returning to Figure 2, at 206, a magnification of one or more of the segments of the map 300 is changed. For example, Figure 5 illustrates the first segment 410 shown in Figure 4 with a changed magnification. For example, the processors 102 may zoom in, magnify, or the like, the first segment 410 of the map 300.

The first segment 410 includes the first theoretical intersection 406A. The first theoretical intersection 406A includes a center 510 (e.g., a center point or center axis). The first theoretical intersection 406A is formed by the intersection of the first theoretical line of longitude 402C intersecting with the first theoretical line of latitude 404C. The magnified display of the first segment 410 also includes a portion of the first theoretical line of longitude 402C and a portion of the first theoretical line of latitude 404C that form or create the first theoretical intersection 406A.

At 208, in the magnified view of the first segment 410, the processors 102 may use an edge detection algorithm and/or other software program to detect or identify one or more edges of one or more of the actual lines of longitude and latitude (e.g., shown in Figure 3). For example, by magnifying the first segment 410, the processors 102 may substantially eliminate some of the digital noise, excess characters, or the like, from the first segment 410 and be able to detect one or more edges of the actual lines of longitude and latitude 502C, 504C.

At 210, a location of an actual intersection within the segment is determined. For example, in the illustrated embodiment of Figure 5, a location of a first actual intersection 506A is determined based in part on the detection and/or locations of the edges associated with the actual or true lines 502C, 504C. In one or more examples, a first point of longitude and a first point of latitude associated with the location of the first actual intersection 506A may be identified. For example, a pixel value on the map 300 is determined and/or returned with the associated latitude-longitude values. In the illustrated example of Figure 5, the magnified display of the first segment 410 includes a portion of the first actual line of longitude 502C and a portion of the first actual line of latitude 504C. For example, the theoretical lines of longitude and latitude 402C, 404C may provide guidance to the processors 102 as to where an actual intersection may potentially be located, and by changing a magnification of an area where a potential intersection may be located, the processors 102 may be able to detect edges of the actual lines of longitude and latitude 502C, 504C to automatically determine and identify actual intersections between the actual or true lines of longitude and latitude.

In the illustrated example, the location of the first actual intersection 506A (e.g., between the actual lines of longitude and latitude 502C, 504C) is different than a location of the center 510 of the first theoretical intersection 406A (e.g., between the theoretical lines of longitude and latitude 402C, 404C). In another example, the location of the first actual intersection 506A may be the same or about the same (e.g., within a determined threshold distance range) as the location of the center 510 of the first theoretical intersection 406A.

At 212, a determination is made if another location of another actual intersection needs to be determined. For example, in the illustrated embodiment shown in Figure 4, the map 300 includes the first segment 410 and the second segment 412. The second segment 412 includes the second theoretical intersection 406B. A location second actual intersection associated with the second theoretical intersection 406B may need to be determined. If a location of another actual intersection needs to be determined, flow of the method returns to 206. The method may continue to repeat based on a number of theoretical intersections that are associated with the map 300, based on a predetermined number of actual intersections that may need to be identified, based on a number of segments that the map 300 includes, or the like. Alternatively, if the locations associated with the actual intersections have been determined, flow of the method proceeds toward 214.

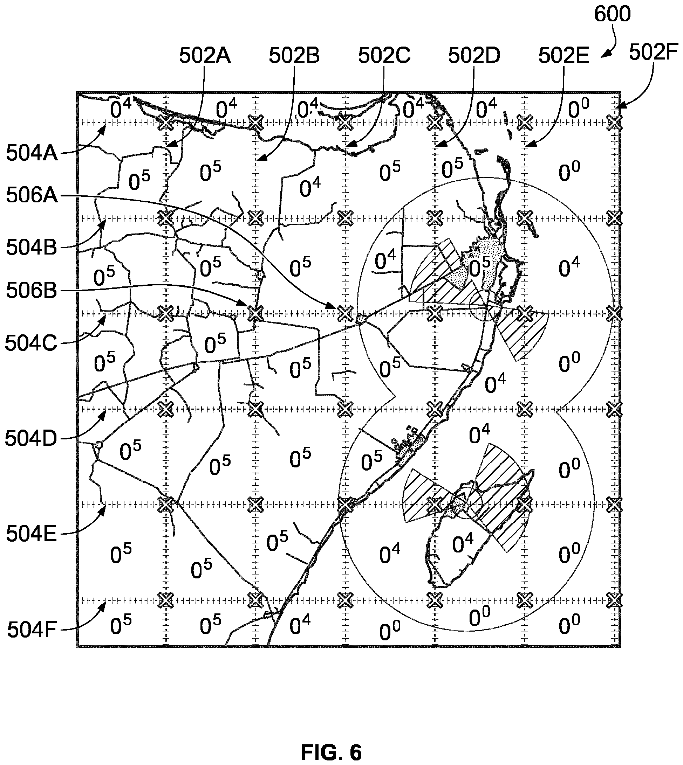

At 214, the map 300 is updated to include the locations of the actual intersection. For example, Figure 6 illustrates an updated map 600 of the geographic location, according to an example of the present disclosure. The updated map 600 includes plural actual intersections 506, including the first actual intersection 506A associated with the first segment 410 and the second actual intersection 506B associated with the second segment 412. Each of the first actual intersection 506A, the second actual intersection 506B, and the other actual intersections 506 that have been located are associated with a corresponding point of longitude and point of latitude. In one example, the map 300 may be updated to include each of the corresponding points of latitude and points of longitude of each of the actual intersections 506 to create the updated map 600.

In one example, a relationship between the location of the first actual intersection 506A and the location of the second actual intersection 506B may be determined. For example, responsive to the adjustment between the locations of the theoretical intersections and the locations of the actual intersections, the corresponding plural first (e.g., theoretical) lines of longitude 402A-F and plural first (e.g., theoretical) lines of latitude 404A-F may need to be adjusted. In one example, one or more second lines of longitude 502A-F and one or more second lines of latitude 504A-F may be determined based on the relationships between the locations of the first and second (and/or one or more other) actual intersections.

The updated map 600 may be referred to as a geo-referenced map. For example, the updated map 600 provides real world coordinates, such as longitude and latitude, and can be used to display objects within the geo-referenced map in the same position as the objects actual, physical position on the surface of the earth.

**In** one or more examples, the updated map 600 may include the identification of three or more actual intersections, each of the three or more intersections including a point of longitude and a point of latitude, in order for the updated image 600 to be geo-referenced. **In** another example, the updated map may include the identification of four of more actual intersections in order for the updated map 600 to be geo-referenced.

**In** one example, the updated map 600 may be stored within the memory 104 of the control system 100, may be communicated (e.g., communicated through one or more wired or wireless connections) with another data storage device or database (not shown), may be shared or displayed to an operator of the control system 100, may be communicated and/or shared with another operator (e.g., an operator of a vehicle system, or the like). For example, the updated map 600 may be automatically communicated to one or more air traffic control centers, one or more airports, one or more dispatch and/or control centers (e.g., for an owner of a fleet of aircraft systems, for an aircraft system manufacturer, or the like), one or more aircraft systems, or the like.

**In** at least one example, the control system 100 automatically performs the steps 202-210 of the flow chart 200 without human intervention. For example, the control system 100 may not complete the steps associated with identifying an actual location of an intersection in response to a request from an operator. Instead, the control system 100 automatically creates and pushes or communicates the geo-referenced map to an operator, to the memory 104, to a remote location (e.g., another control system, or the like), or the like.

Also provided are the following illustrative, non-exhaustive examples of the subject-matter encompassed herein, which relate to:

A method, comprising: identifying one or more characteristics of a map of a geographic location; placing plural first lines of longitude and plural first lines of latitude on the map based at least in part on the one or more characteristics that are identified, the plural first lines of longitude and the plural first lines of latitude placed on to the map creating plural theoretical intersections between the plural first lines of longitude and the plural first lines of latitude; changing a magnification of a first segment of the map, the first segment containing a first theoretical intersection between at least one of the plural first lines of longitude and at least one of the plural first lines of latitude; identifying one or more edges within the first segment associated with at least one of plural second lines of longitude and at least one of plural second lines of latitude; and determining a location of a first actual intersection within the first segment of the map based at least in part on the identification of the one or more edges associated with the at least one of the plural second lines of longitude and the at least one of the plural second lines of latitude.

The method described in the immediately preceding paragraph, wherein the location of the first actual intersection is different than a location of the first theoretical intersection.

The method described in any one of the two immediately preceding paragraphs, further comprising identifying a first point of longitude and a first point of latitude associated with the location of the first actual intersection.

The method described in the immediately preceding paragraph, further comprising modifying the map of the geographic location to include the first point of longitude and the first point of latitude associated with the location of the first actual intersection to create an updated map of the geographic location.

The method described in the immediately preceding paragraph, further comprising communicating the updated map of the geographic location with one or more of a database or an operator.

The method described in any one of the five immediately preceding paragraphs, further comprising: changing a magnification of a second segment of the map, the second segment of the map containing a second theoretical intersection between at least one of the plural first lines of longitude and at least one of the plural first lines of latitude; identifying one or more edges within the second segment associated with the at least one of the plural second lines of longitude and the at least one of the plural second lines of latitude; and determining a location of a second actual intersection within the second segment of the map based at least in part on the identification of the one or more edges within the second segment associated with the at least one of the plural second lines of longitude and the at least one of the plural second lines of latitude.

The method described in the immediately preceding paragraph, further comprising identifying a second point of longitude and a second point of latitude associated with the location of the second actual intersection.

The method described in the immediately preceding paragraph, further comprising modifying the map of the geographic location to include the second point of longitude and the second point of latitude.

The method described in the first of the three immediately preceding paragraphs, further comprising: determining a relationship between the location of the first actual intersection within the first segment of the map and the location of the second actual intersection within the second segment of the map.

The method described in the immediately preceding paragraph, wherein the plural first lines of longitude and the plural first lines of latitude are plural theoretical lines of longitude and plural theoretical lines of latitude, respectively, and wherein the one or more second lines of longitude and the one or more second lines of latitude are one or more actual lines of longitude and one or more actual lines of latitude, respectively.

A method, comprising: identifying one or more characteristics of a map of a geographic location; creating plural first lines of longitude and plural first lines of latitude of the map based at least in part on the one or more characteristics that are identified, the plural first lines of longitude and the plural first lines of latitude forming plural theoretical intersections between the plural first lines of longitude and the plural first lines of latitude; separating the map of the geographic location into plural segments, each of the plural segments containing at least one of the plural theoretical intersections; changing a magnification of each of the plural segments of the map; identifying one or more edges within each of the plural segments, the one or more edges associated with at least one of plural second lines of longitude and at least one of plural second lines of latitude; and determining plural locations of actual intersections based at least in part on the one or more edges, each of the plural locations of the actual intersections corresponding to the at least one of the plural theoretical intersections within each of the plural segments..

The method described in the immediately preceding paragraph, further comprising modifying the map of the geographic location to include the plural locations of the actual intersections to create an updated map of the geographic location.

The method described in the immediately preceding paragraph, further comprising communicating the updated map of the geographic location with one or more of a database or an operator.

The method described in any one of the three immediately preceding paragraphs, wherein each of the plural locations of the actual intersections include an actual point of longitude and an actual point of latitude.

The method described in any one of the four immediately preceding paragraphs, wherein one or more of the plural locations of the actual intersections are different than locations of one or more of the plural theoretical intersections.

The method described in any one of the five immediately preceding paragraphs, further comprising: determining one or more relationships between two or more of the plural locations of the actual intersections.

The method described in the immediately preceding paragraph, wherein the plural first lines of longitude and the plural first lines of latitude are plural theoretical lines of longitude and plural theoretical lines of latitude, respectively, and wherein the one or more second lines of longitude and the one or more second lines of latitude are one or more actual lines of longitude and one or more actual lines of latitude, respectively.

A non-transitory computer-readable storage medium comprising executable instructions that, in response to execution, cause one or more control systems comprising one or more processors, to perform operations comprising: identifying one or more characteristics of a map of a geographic location; placing plural first lines of longitude and plural first lines of latitude on the map based at least in part on the one or more characteristics that are identified, the plural first lines of longitude and the plural first lines of latitude forming plural theoretical intersections between the plural first lines of longitude and the plural first lines of latitude; separating the map of the geographic location into plural segments, each of the plural segments containing at least one of the plural theoretical intersections; changing a magnification of each of the plural segments of the map; identifying one or more edges within each of the plural segments, the one or more edges associated with at least one of plural second lines of longitude and at least one of plural second lines of latitude; and determining plural locations of actual intersections based at least in part on the one or more edges identified within each of the plural segments, each of the plural locations of the actual intersections corresponding to the at least one of the plural theoretical intersections within each of the plural segments.

The non-transitory computer-readable storage medium described in the immediately preceding paragraph, further comprising modifying the map of the geographic location to include the plural locations of the actual intersections to create an updated map of the geographic location.

The non-transitory computer-readable storage medium described in any one of the two immediately preceding paragraphs, further comprising communicating the updated map of the geographic location with one or more of a database or an operator.

As described herein, examples of the present disclosure provide systems and methods for automatically determining locations of actual lines of longitude and latitude, and locations of actual intersections between the lines of longitude and latitude, on a map or a chart. Locating the actual lines of longitude and latitude, and the actual locations of intersections between the lines of longitude and latitude provides real world coordinates that can be used to display objects within the map in the same position as the actual, physical position of the objects on the surface of the earth.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A method, comprising:
identifying one or more characteristics (302A-D) of a map (300) of a geographic location;
placing plural first lines of longitude (402A-F) and plural first lines of latitude (404A-F) on to the map (300) based at least in part on the one or more characteristics (302A-D) that are identified, the plural first lines of longitude (402A-F) and the plural first lines of latitude (404A-F) forming plural theoretical intersections (406) between the plural first lines of longitude (402A-F) and the plural first lines of latitude (404A-F);
changing a magnification of a first segment (410) of the map (300), the first segment (410) containing a first theoretical intersection (406A) between at least one of the plural first lines of longitude (402A-F) and at least one of the plural first lines of latitude (404A-F);
identifying one or more edges within the first segment (410) associated with at least one of plural second lines of longitude (502A-F) and at least one of plural second lines of latitude (504A-F); and
determining a location of a first actual intersection (506A) within the first segment (410) of the map (300) based at least in part on the identification of the one or more edges associated with the at least one of the plural second lines of longitude (502A-F) and the at least one of the plural second lines of latitude (504A-F).

2. The method of claim 1, wherein the location of the first actual intersection (506A) is different than a location of the first theoretical intersection (510).

3. The method of any of claims 1 - 2, further comprising identifying a first point of longitude and a first point of latitude associated with the location of the first actual intersection (506A).

4. The method of claim 3, further comprising modifying the map (300) of the geographic location to include the first point of longitude and the first point of latitude associated with the location of the first actual intersection (506A) to create an updated map (600) of the geographic location.

5. The method of any of claims 1 - 5, further comprising:
changing a magnification of a second segment (412) of the map (300), the second segment (412) of the map (300) containing a second theoretical intersection (406B) between at least one of the plural first lines of longitude (402A-F) and at least one of the plural first lines of latitude (404A-F);
identifying one or more edges within the second segment (412) associated with at least one of the plural second lines of longitude (502A-F) and at least one of the plural second lines of longitude (504A-F); and
determining a location of a second actual intersection (506B) within the second segment (412) of the map (300) based at least in part on the identification of the one or more edges within the second segment (412) associated with the at least one of the plural second lines of longitude (502A-F) and the at least one of the plural second lines of latitude (504A-F).

6. The method of claim 5, further comprising identifying a second point of longitude and a second point of latitude associated with the location of the second actual intersection (506B).

7. The method of claim 5, further comprising:
determining a relationship between the location of the first actual intersection (506A) within the first segment (410) of the map (300) and the location of the second actual intersection (506B) within the second segment (412) of the map (300).

8. The method of claim 7, wherein the plural first lines of longitude (402A-F) and the plural first lines of latitude (404A-F) are plural theoretical lines of longitude and plural theoretical lines of latitude, respectively, and wherein the one or more second lines of longitude (502A-F) and the one or more second lines of latitude (504A-F) are one or more actual lines of longitude and one or more actual lines of latitude, respectively.

9. A method, comprising:
identifying one or more characteristics (302A-D) of a map (300) of a geographic location;
creating plural first lines of longitude (402A-F) and plural first lines of latitude (404A-F) on the map (300) based at least in part on the one or more characteristics (302A-D) that are identified, the plural first lines of longitude (402A-F) and the plural first lines of latitude (404A-F) forming plural theoretical intersections (406) between the plural first lines of longitude (402A-F) and the plural first lines of latitude (404A-F);
separating the map (300) of the geographic location into plural segments (410, 412), each of the plural segments (410, 412) containing at least one of the plural theoretical intersections (406);
changing a magnification of each of the plural segments (410, 412) of the map (300);
identifying one or more edges within each of the plural segments (410, 412), the one or more edges associated with at least one of plural second lines of longitude (502A-F) and at least one of plural second lines of latitude (504A-F); and
determining plural locations of actual intersections (506) based at least in part on the identifying of the one or more edges, each of the plural locations of the actual intersections (506) corresponding to the at least one of the plural theoretical intersections (406) within each of the plural segments (410, 412).

10. The method of claim 9, further comprising modifying the map (300) of the geographic location to include the plural locations of the actual intersections (506) to create an updated map (600) of the geographic location.

11. The method of claim 9, wherein each of the plural locations of the actual intersections (506) include an actual point of longitude and an actual point of latitude.

12. The method of claim 9, wherein one or more of the plural locations of the actual intersections (506) are different than locations of one or more of the plural theoretical intersections (406).

13. The method of claim 9, further comprising:
determining one or more relationships between two or more of the plural locations of the actual intersections (506).

14. The method of claim 9, wherein the plural first lines of longitude (402A-F) and the plural first lines of latitude (404A-F) are plural theoretical lines of longitude and plural theoretical lines of latitude, respectively, and wherein the one or more second lines of longitude (502A-F) and the one or more second lines of latitude (504A-F) are one or more actual lines of longitude and one or more actual lines of latitude, respectively.

15. A non-transitory computer-readable storage medium comprising executable instructions that, in response to execution, cause one or more control systems (100) comprising one or more processors (102), to perform a method according to any of claims 9 to 14.
